# EUROPÄISCHE PATENTSCHRIFT

(11) **EP 0 845 942 B1**
(45) Veröffentlichungstag und Bekanntmachung des Hinweises auf die Patenterteilung: **09.10.2002**
(21) Anmeldenummer: 96927569.2
(22) Anmeldetag: 22.07.1996
(51) Int. Cl.: A01N 25/22, A01N 31/02, A01N 53/08, A01N 61/00

(54) **SCHÄDLINGSBEKÄMPFUNGSMITTEL**
PESTICIDES
PESTICIDES

(30) Priorität: 03.08.1995 DE 19528529
(43) Veröffentlichungstag der Anmeldung: 10.06.1998
(73) Patentinhaber: BAYER AG, 51368 Leverkusen (DE)
(72) Erfinder: LÖSEL, Peter, D-40789 Monheim (DE); PENNERS, Gunther, D-41470 Neuss (DE); CIANCIULLI-TELLER, Maria-Giuliana, D-42113 Wuppertal (DE)
(86) Internationale Anmeldenummer: EP9603220
(87) Internationale Veröffentlichungsnummer: WO97005778

(56) Entgegenhaltungen:
- EP-A- 0 376 888
- DE-A- 3 107 129
- DE-A- 4 136 832
- DE-A- 4 330 591
- GB-A- 2 058 569
- US-A- 4 456 587
- CHEMICAL ABSTRACTS, vol. 109, no. 25, 19.Dezember 1988 Columbus, Ohio, US; abstract no. 224663, IDESES, RUT ET AL: "Chemical protection of pheromones containing an internal conjugated diene system from isomerization and oxidation" XP002020521 & J. CHEM. ECOL. (1988), 14(8), 1657-69 CODEN: JCECD8;ISSN: 0098-0331, 1988,

## Beschreibung

Die vorliegende Erfindung betrifft neue Mittel zur Bekämpfung von schädlichen Insekten und Vertretern der Ordnung Acarina, ein Verfahren zur Herstellung dieser Mittel und deren Verwendung in der Landwirtschaft, der Forstwirtschaft und im Gartenbau.

Bei der Bekämpfung von tierischen Pflanzenschädlingen mit Hilfe von Pestiziden ist man bestrebt, eine Kontamination der zu schützenden Pflanzen und ihrer Umgebung einschließlich des Bodens, auf dem sie wachsen, zu minimieren. Außerdem sollen Nützlinge und Warmblüter durch die pestiziden Wirkstoffe möglichst wenig beeinträchtigt werden. Im Gegensatz dazu sollen aber die zu bekämpfenden Schädlinge den pestiziden Wirkstoffen möglichst intensiv ausgesetzt werden, damit die Schädlinge die Wirkstoffe durch Kontakt, als Fraßgifte oder über die Gasphase in ausreichender Menge aufnehmen können.

Die genannten Bedingungen lassen sich bei der Bekämpfung von Insekten zum Beispiel dadurch erfüllen, daß man Signalsubstanzen, wie Pheromone, Kairomone oder Lockstoffe, die auf Insekten anziehend wirken, mit insektiziden Wirkstoffen kombiniert und die entstehenden Mischungen nicht flächendeckend, sondern nur eng lokal begrenzt an einzelnen Stellen in den zu schützenden Bestand ausbringt. Da die Signalsubstanzen an den behandelten Orten freigesetzt werden, bewegen sich die Schädlinge dorthin, kontaminieren sich mit den pestiziden Wirkstoffen und werden abgetötet. Diese Art der Insektenbekämpfung wird als "Attract-andkill"-Methode bezeichnet.

Im Unterschied dazu ist es auch möglich, Insekten mit Hilfe der sogennanten "Verwirrungs"-Strategie zu bekämpfen. Bei dieser Methode werden Pheromone in einer so großen Menge in den zu schützenden Pflanzenbestand eingebracht, daß die männlichen Insekten nicht mehr in der Lage sind, die weiblichen Insekten zu orten. Auf diese Weise wird eine Vermehrung der Schädlinge verhindert.

Damit die bei den beiden Bekämpfungsstrategien verwendeten Mittel eine ausreichend lang andauernde Wirkung entfalten, müssen die Lockstoffe in den betreffenden Formulierungen so enthalten sein, daß sie einerseits kontrolliert freigesetzt werden, andererseits gegen Umwelteinflüsse, wie Licht, Sauerstoff und Witterung geschützt sind.

Es sind bereits zahlreiche Zubereitungen bekannt, denen die geschilderten Prinzipien der Bekämpfung tierischer Schädlinge zugrunde liegen. Durch unterschiedliche Maßnahmen wird dabei versucht, die empfindlichen Wirkstoffe gegen unerwünschten Abbau zu schützen.

So geht aus der EP-A 0 055 475 hervor, daß sich männliche Insekten der Spezies Cossus cossus mit Hilfe von (Z)-5-Dodecen-1-yl-acetat gegebenenfalls im Gemisch mit (Z)-3-Decen-1-yl-acetat, (Z)-3-Dodecen-1-yl-acetat und/oder (E)-5-Dodecen-1-yl-acetat bekämpfen lassen. Der Lockstoff bzw. Gemische der aktiven Komponenten werden dabei in Solventien mit niedrigem Dampfdruck, wie Öle oder Fette, ausgebracht oder gegebenenfalls auch im Gemisch mit Antoxidantien und UV-Stabilisatoren auf inerten Feststoffen adsorbiert angewandt.

Weiterhin werden in der GB-PA 2 064 323 Insektenbekämpfungsmittel auf Basis von Pheromonen beschrieben, in denen die Signalsubstanzen sowie UV-Stabilisatoren und zusätzliche Additive, wie Antoxidantien, auf einer Kombination aus absorbierenden und adsorbierenden Feststoffen fixiert sind. Nachteilig an diesen Zubereitungen ist jedoch, daß sie trotz der darin enthaltenen stabilisierenden Zusätze gegen Witterungseinflüsse nur relativ wenig widerstandsfähig sind und die Wirkstoffe deshalb schon nach verhältnismäßig kurzer Zeit zersetzt oder ausgewaschen werden.

Ferner ist es bereits bekannt, Kombinationen aus Lockstoffen und Insektiziden in mikroverkapselter Form oder in wasserlöslichen Polymeren gebunden zur Schädlingsbekämpfung einzusetzen (vgl. JP-A 59-7101 und "Advances in Pesticide Formulation Technology" 1984, Kapitel 11, Seiten 151-162). Bei der Herstellung dieser Mikrokapseln geht man so vor, daß man die Wirkstoffe in einer Ölphase löst, das entstehende Gemisch in Wasser emulgiert und anschließend verkapselt. Hierdurch wird erreicht, daß der Lockstoff kontrolliert freigesetzt wird und außerdem gegen Umwelteinflüsse geschützt ist. Nachteilig an diesem Verfahren ist aber, daß eine Mikroverkapselung aufwendig ist. Außerdem ist eine genügende Stabilität der Lockstoffe gegen Umwelteinflüsse trotz Verkapselung nicht immer gegeben, weil die dünne Kapselwand kein ausreichender Schutz gegen photochemischen Abbau darstellt.

Gemäß GB-A 2 141 932 lassen sich Zubereitungen, in denen Pheromone gegebenenfalls im Gemisch mit UV-Absorbern und anderen Additiven in flüssigen oder halbflüssigen, wasserbeständigen und gegen UV-Strahlung schützenden Polymeren enthalten sind, als Schädlingsbekämpfungsmittel verwenden. In diesen Formulierungen bleiben die aktiven Komponenten zwar über einen ausreichend langen Zeitraum stabil, die nach außen diffundierende Menge an Wirkstoff gewährleistet aber nicht immer einen ausreichenden Wirkungsgrad.

Der EP-A 0 376 888 ist zu entnehmen, daß auch solche Formulierungen zur Schädlingsbekämpfung geeignet sind, die neben Insektiziden und Lockstoffen sowie üblichen Zusatzstoffen zum größten Teil aus einem oder mehreren permanent flüssigen UV-Absorbern bestehen und in viskoser, auch auf Dauer nicht aushärtender Form vorliegen. Durch den sehr hohen Gehalt an UV-absorbierenden Substanzen sind die in diesen Formulierungen enthaltenen Lockstoffe längere Zeit gegen Photoabbau geschützt. Die Anwendung in der Praxis wirft jedoch Probleme auf, weil die UV-Absorber in der Regel sehr stabil sind, und nicht oder nur sehr schwer abgebaut werden. Dadurch akkumuliert die Formulierung, wenn sie regelmäßig über mehrere Jahre hinweg angewandt wird, in der behandelten Kulturfläche.

Weiterhin sind aus der WO 87-04 591 Mittel zur Bekämpfung von Spinnmilben bekannt. Die Formulierungen bestehen aus einem Substrat, das Lockstoffe, wie Nerodiol und Farnesol, ferner insektizide Wirkstoffe und auch in Form von Emulsionen zugesetzte Öle enthält. Aus diesen Substraten werden die Lockstoffe kontrolliert freigegeben. Nachteilig ist aber, daß mit Hilfe dieser Mittel keine Langzeitwirkung erzielt wird. Vielmehr bedarf es regelmäßiger Nachbehandlungen, um ein befriedigendes Bekämpfungsergebnis zu erreichen.

In J. Entomol. Sci. Vol. 25, No. 4, 581-586, (1990) werden pheromon- und insektizidhaltige Zubereitungen zur Bekämpfung des Baumwollkapselspinners (Anthonomus grandis) beschrieben. Die Mittel enthalten als eine wesentliche Komponente Baumwollsamenöl, das die Fraßneigung des Schädlings erhöht und dadurch die Aufnahme von Wirkstoff fördert. Ungünstig ist aber, daß dieses Pflanzenöl nicht zur Stabilisierung der Formulierung gegen Umwelteinflüsse beiträgt.

Schließlich ist bekannt, daß Öle in lockstoffhaltigen Zubereitungen als Lösemittel für Wirkstoffe fungieren können (vgl. WO 87-04 591, EP-A 0 055 475 und "Advances in Pesticide Formulation Technology 1984, Kapitel 11, Seiten 151 bis 162). Eine Stabilisierung der Wirkstoffe gegen unerwünschten Abbau wird dadurch aber nicht erreicht.

Die US - A 4 456 587 betrifft Mittel, die aus einem Pheromon,einem Polymer, einem UV - Licht - Absorber und einem Pflanzenöl bestehen. In diesen Zubereitungen ist aber weder ein pestizider Wirkstoff noch Ricinusöl enthalten.

Aus der DE-A 3 107 129 sind insektizide Mittel bekannt, die aus
- mindestens einem Pyrethroid als Wirkstoff,
- mindestens einem Pflanzenöl und / oder
- mindestens einem Detergens, mindestens einem niederen Alkohol
- sowie gegebenenfalls destilliertem Wasser und Duftstoffen
bestehen. Es werden jedoch keine Zubereitungen erwähnt, in denen ein UV - Licht - Absorber vorhanden ist.

Es wurden nun neue Schädlingsbekämpfungsmittel gefunden, die
- mindestens eine Signalsubstanz,
- mindestens einen mit Wasser nur wenig mischbaren UV-Absorber,
- Ricinusöl,
- mindestens einen pestiziden Wirkstoff und
- gegebenenfalls Zusatzstoffe
enthalten.

Weiterhin wurde gefunden, daß sich erfindungsgemäße Mittel herstellen lassen, indem man
a) mindestens eine Signalsubstanz, mindestens einen mit Wasser nur wenig mischbaren UV-Absorber sowie mindestens einen pestiziden Wirkstoff und gegebenenfalls Zusatzstoffe in Ricinusöl dispergiert und
b) gegebenenfalls diese Vormischung unter Zusatz von oberflächenaktiven Substanzen in Wasser emulgiert.

Schließlich wurde gefunden, daß sich die erfindungsgemäßen Mittel sehr gut zur Bekämpfung schädlicher Insekten und unerwünschter Vertreter der Ordnung Acarina in der Landwirtschaft, der Forstwirtschaft und im Gartenbau verwenden lassen.

Es ist als äußerst überraschend zu bezeichnen, daß die erfindungsgemäßea Mittel, die ein Gemisch aus UV-Absorber und Ricinusöl enthalten, die vorhandenen Signalsubstanzen und die auch vorhandenen pestiziden Wirkstoffe besser gegen umweltbedingten Abbau schützen als vorbekannte Mittel, die entweder allein das ungesättigte Pflanzenöl oder nur den UV-Absorber enthalten.

Die erfindungsgemäßen Mittel zeichnen sich durch eine Reihe von Vorteilen aus. So ermöglichen sie eine gezielte und umweltschonende Schädlingsbekämpfung über einen längeren Zeitraum. Ferner weisen die in diesen Zubereitungen enthaltenen Lockstoffe auch bei ungünstigen Witterungsverhältnissen eine sehr gute Stabilität auf.

Als Signalsubstanzen können in den erfindungsgemäßen Mitteln alle üblichen Stoffe enthalten sein, die auf die zu bekämpfenden Schädlinge anziehend wirken und deren Verhalten ändern. Vorzugsweise in Fräge kommende Signalsubstanzen sind Pheromone, Kairomone und Lockstoffe. Als Beispiele für derartige Stoffe seien die folgenden Substanzen genannt:

Z-5-Decenylacetat, Dodecanylacetat, Z-7-Dodecenylacetat, E-7-Dodecenylacetat, Z-8-Dodecenylacetat, E-8-Dodecenylacetat, Z-9-Dodecenylacetat, E-9-Dodecenylacetat, E-10-Dodecenylacetat, 11-Dodecenylacetat, Z-9, 11-Dodecadienylacetat, E-9, 11-Dodecadienylacetat, Z-11-Tridecenylacetat, E-11-Tridecenylacetat, Tetradecenylacetat, E-7-Tetradecenylacetat, Z-8-Tetradecenylacetat, E-8-Tetradecenylacetat, Z-9-Tetradecenylacetat, E-9-Tetradecenylacetat, Z-10-Tetradecenylacetat, E-10-Tetradecenylacetat, Z-11-Tetradecenylacetat, B-11-Tetradecenylacetat, Z-12-Pentadecenylacetat, E-12-Pentadecenylacetat, Hexädecanylacetat, Z-7-Hexadecenylacetat, Z-11-Hexadecenylacetat, E-11-Hexadecenylacetat, Octadecanylacetat, E,Z-7,9-Dodecadienylacetat, Z,E-7,9-Dodecadienylacetat, E,E-7,9-Dodecadienylacetat, Z,Z-7,9-Dodecadienylacetat, E,E-8,10-Dodecadienylacetat, E,Z-9,12-Dodecadienylacetat, E,Z-4,7-Tridecadienylacetat, 4-Methoxy-cinnamaldehyd, β-Ionon, Estragol, Eugenol, Indol, 8-Methyl-2-decyl-propanoat, E,E-9,11-Tetradecadienylacetat, Z,Z-9,12-Tetradecadienylacetat, Z,Z-7,11-Hexadecadienylacetat, E,Z-7,11-Hexadecadienylacetat, Z,E-7,11-Hexadecadienylacetat, E,E-7,11-Hexadecadienylacetat, Z,E-3,13-Octadecadienylacetat, E,Z-3,13-Octadecadienylacetat, E,E-3,13-Octadecadienylacetat, Aethanol, Hexanol, Heptanol, Octanol, Decanol, Z-6-Nonenol, E-6-Nonenol, Dodecanol, 11-Dodecenol, Z-7-Dodecenol, E-7-Dodecenol, Z-8-Dodecenol, E-8-Dodecenol, E-9-Dodecenol, Z-9-Dodecenol, E-9,11-Dodecadienol, Z-9,11-Dodecadienol, Z,E-5,7-Dodecadienol, E,E-5,7-Dodecadienol, E,E-8,10-Dodecadienol, E,Z-8,10-Dodecadienol, Z,Z-8,10-Dodecadienol, Z,E-8,10-Dodecadienol, E,Z-7,9-Dodecadienol, Z,Z-7,9-Dodecadienol, E-5-Tetradecenol, Z-8-Tetradecenol, Z-9-Tetradecenol, E-9-Tetradecenol, Z-10-Tetradecenol, Z-11-Tetradecenol, E-11-Tetradecenol, Z-11-Hexadecenol, Z,E-9,11-Tetradecadienol, Z,E-9,12-Tetradecadienol, Z,Z-9,12-Tetradecadienol, Z,Z-10,12-Tetradecadienol, Z,Z-7,11-Hexadecadienol, Z,E-7,11-Hexadecadienol, (E)-14-Methyl-8-Hexadecen-1-ol, (Z)-14-Methyl-8-Hexadecen-1-ol, E,E-10,12-Hexadecadienol, E,Z-10,12-Hexadecadienol, Dodecanal, Z-9-Dodecenal, Tetradecanal, Z-7-Tetradecenal, Z-9-Tetradecenal, Z-11-Tetradecenal, E-11-Tetradecenal, E-11,13-Tetradecadienal, E,E-8,10-Tetradecadienal, Z,E-9,11-Tetradecadienal, Z,E-9,12-Tetradecadienal, Hexadecanal, Z-8-Hexadecenal, Z-9-Hexadecenal, Z-10-Hexadecenal, E-10-Hexadecenal, Z-11-Hexadecenal, E-11-Hexadecenal, Z-12-Hexadecenal, Z-13-Hexadecenal, (Z)-14-Methyl-8-Hexadecenal, (E)-14-Methyl-8-Hexadecenal, Z,Z-7,11-Hexadecadienal, Z,E-7,11-Hexadecadienal, Z,E-9,11-Hexadecadienal, E,E-10,12-Hexadecadienal, E,Z-10,12-Hexadecadienal, Z,E-10,12-Hexadecadienal, Z,Z-10,12-Hexadecadienal, Z,Z-11,13-Hexadecadienal, Octadecanal, Z-11-Octadecenal, E-13-Octadecenal, Z-13-Octadecenal, Z-5-Decenyl-3-methyl-butanoat Disparlure: (+) cis-7,8-Epoxy-2-methyloctadecan, Seudenol: 3-Methyl-2-cyclohexen-1-ol, Sulcatol: 6-Methyl-5-hepten-2-ol, Ipsenol: 2-Methyl-6-methylen-7-octen-4-ol, Ipsdienol: 2-Methyl-6-methylen-2,7-octadien-4-ol, Grandlure I: cis-2-Isopropenyl-1-methylcyclobutanethanol, Grandlure II: Z-3,3-Dimethyl-1-cyclohexanethanol, Grandlure III: Z-3,3-Dimethyl-1-cyclohexanacetaldehyd, Grandlure IV: E-3,3-Dimethyl-1-cyclohexanacetaldehyd, cis-2-Verbenol: cis-4,6,6-Trimethylbicyclo[3,1,1]hept-3-en-2-ol cucurbitacin, 2-Methyl-3-buten-2-ol, 4-Methyl-3-heptanol, Cucurbitacin, 2-Methyl-3-buten-2-ol, 4-Methyl-3-heptanol, α-Pinen: 2,6,6-Trimethylbicyclo[3,1,1]hept-2-en, α-Caryophyllen: 4,11,11-Trimethyl-8-methylenbicyclo[7,2,0]undecan, Z-9-Tricosen, α-Multistriatin, 2-(2-endo, 4-endo)-5-Ethyl-2,4-dimethyl-6,8-dioxabicyclo[3,2,1]octan, Methyleugenol: 1,2-Dimethoxy-4-(2-propenyl)phenol, Lineatin: 3,3,7-Trimethyl-2,9-dioxatricyclo[3,3,1,0]nonan, Chalcogran: 2-Aethyl-1,6-dioxaspiro[4,4]nonan, Frontalin: 1,5-Dimethyl-6,8-dioxabicyclo[3,2,1]octan, endo-Brevicomin: endo-7-Ethyl-5-methyl-6,8-dioxabicyclo[3,2,1]octan, exo-Brevicomin: exo-7-Ethyl-5-methyl-6,8-dioxabicyclo[3,2,1]octan, (Z)-5-(1-Decenyl)dihydro-2-(3H)-furanon, Farnesol 3,7-, 11-Trimethyl-2,6,10-dodecatrien-1-ol, Nerolidol 3,7,-11-Trimethyl-1,6,10-dodecatrien-3-ol, 3-Methyl,6-(1-methylethenyl)-9-decen-1-olacetat, (Z)-3-Methyl-6-(1-methylethenyl)-3,9-decadien-1-ol-acetat, (E)-3,9-Methyl-6-(1-methylethenyl)-5,8-decadien-1-ol-acetat, 3-Methylen-7-methyl-octen-1-olpropionat, (Z)-3,7-Dimethyl-2,7-octadien-1-ol-propionat, (Z)-3,9-Dimethyl-6-(1-methylethenyl)-3,9-decadien-1-ol-propionat.

Die erfindungsgemäßen Mittel enthalten mindestens einen mit Wasser nur wenig mischbaren UV-Absorber. Hierunter sind Substanzen zu verstehen, die in der Lage sind, UV-Licht zu absorbieren, vorzugsweise UV-Strahlung aus dem Sonnenlicht im Wellenlängenbereich von 270 bis 400 nm. Vorzugsweise in Betracht kommen flüssige UV-Absorber, wie
- 2-(2-Hydroxyphenyl)-benztriazole der Formel 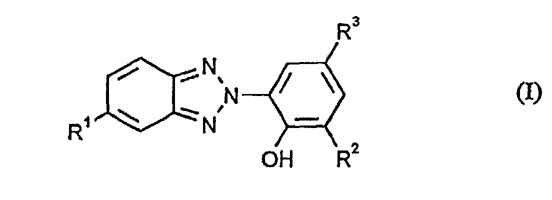 in welcher
   - R¹: für Wasserstoff oder Chlor steht,
   - R²: für Wasserstoff, Alkyl, Phenylalkyl oder Phenyl steht und
   - R³: für Alkyl, Phenylalkyl, Phenyl oder -(CH₂)₂-COO-Alkyl steht,
- 2-Hydroxy-4-alkoxy-benzophenone der Formel 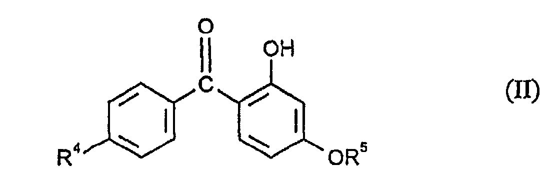 in welcher
   - R⁴: für Wasserstoff, Alkyl oder Alkoxy steht und
   - R⁵: für Alkyl, vorzugsweise für Isooctyl oder Dodecyl steht,
- Oxalanilide der Formel 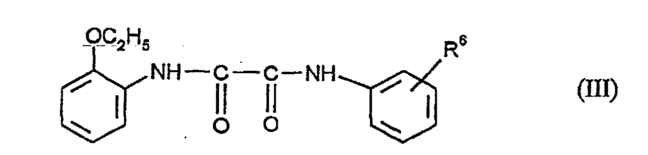 in welcher
   - R⁶: für Alkyl steht,
- Zimtsäure-Derivate der Formeln 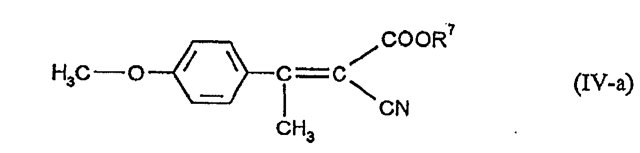 in welcher
   - R⁷: für Alkyl, vorzugsweise für n-Butyl steht, oder 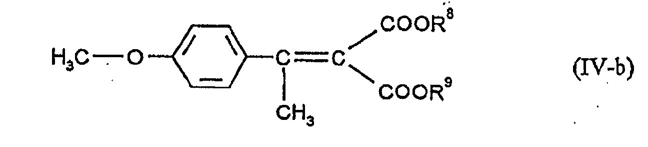
   in welcher
   - R⁸ und R⁹: für Alkyl stehen, oder 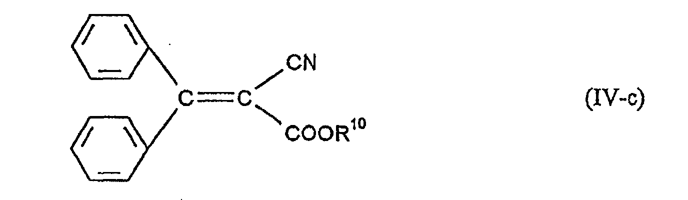
   in welcher
   - R¹⁰: für Alkyl, vorzugsweise für Butyl oder den Rest 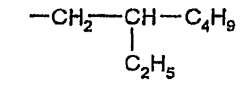 steht,
und
- Triazin-Derivate der Formel 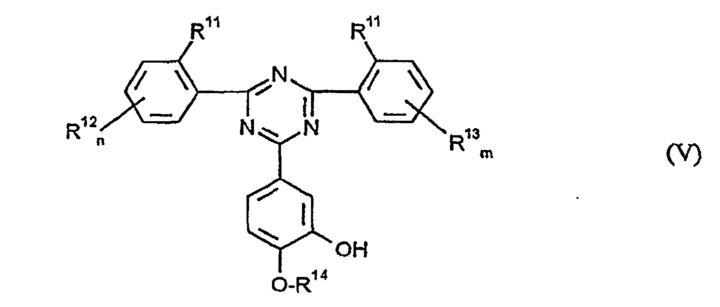 in welcher
   - R¹¹: für Wasserstoff oder Hydroxy steht,
   - R¹²: für Alkyl mit 1 bis 18 Kohlenstoffatomen steht,
   - R¹³: für Alkyl mit 1 bis 18 Kohlenstoffatomen oder Alkoxy mit 1 bis 18 Kohlenstoffatomen steht,
   - R¹⁴: für Alkyl mit 1 bis 18 Kohlenstoffatomen steht und
   - m und n: für die Zahlen 0, 1 oder 2 stehen.

Als Beispiele für 2-(2-Hydroxyphenyl)-benztriazole der Formel (I) seien die in der folgenden Tabelle 1 aufgeführten Stoffe genannt:

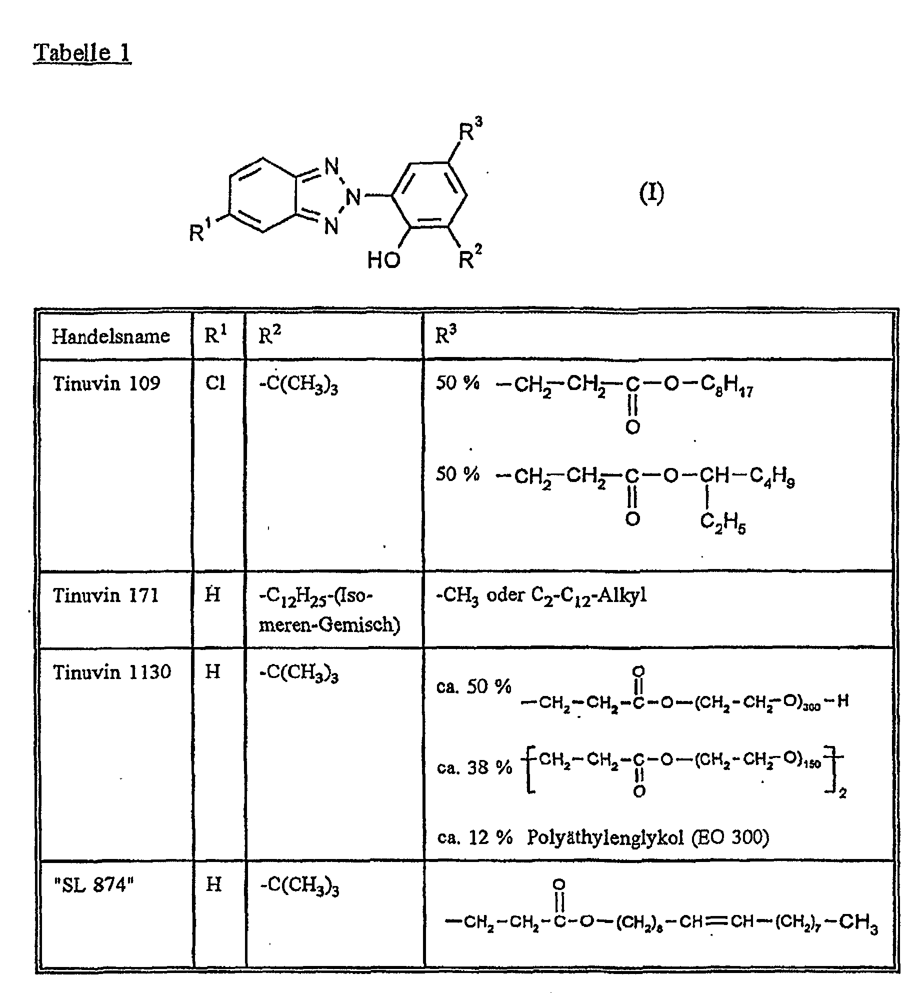

Die erfindungsgemäßen Mittel enthalten einen oder mehrere pestizide Wirkstoffe. Hierunter sind alle üblichen, zur Bekämpfung von schädlichen Insekten und unerwünschten Vertretern der Ordnung Acarina geeigneten Substanzen zu verstehen. Vorzugsweise in Betracht kommen Carbamate, organische PhosphorVerbindungen, Nitrophenole und deren Derivate, Nitromethylene, Nicotinoide, Formamidine, Harnstoffe, Phenylbenzoylharnstoffe, Pyrethroide, chlorierte Kohlenwasserstoffe und Bazillus thuringensis-Präparate. Als Beispiele seien die folgenden Stoffe genannt:

Abamectin, AC 303 630, Acephat, Acrinathrin, Alanycarb, Aldicarb, Alphamethrin, Amitraz, Avermectin, AZ 60541, Azadirachtin, Azinphos A, Azinphos M, Azocyclotin,
Bacillus thuringiensis, Bendiocarb, Benfuracarb, Bensultap, Betacyfluthrin, Bifenthrin, BPMC, Brofenprox, Bromophos A, Bufencarb, Buprofezin, Butocarboxim, Butylpyridaben,
Cadusafos, Carbaryl, Carbofuran, Carbophenothion, Carbosulfan, Cartap, CGA 157 419, CGA 184699, Chloethocarb, Chlorethoxyfos, Chlorfenvinphos, Chlorfluazuron, Chlormephos, Chlorpyrifos, Chlorpyrifos M, Cis-Resmethrin, Clocythrin, Clofentezin, Cyanophos, Cycloprothrin, Cyfluthrin, Cyhalothrin, Cyhexatin, Cypermethrin, Cyromazin,
Deltamethrin, Demeton M, Demeton S, Demeton-S-methyl, Diafenthiuron, Diazinon, Dichlofenthion, Dichlorvos, Dicliphos, Dicrotophos, Diethion, Diflubenzuron, Dimethoat,
Dimethylvinphos, Dioxathion, Disulfoton,
Edifenphos, Emamectin, Esfenvalerat, Ethiofencarb, Ethion, Ethofenprox, Ethoprophos, Etrimphos,
Fenamiphos, Fenazaquin, Fenbutatinoxid, Fenitrothion, Fenobucarb, Fenothiocarb, Fenoxycarb, Fenpropathrin, Fenpyrad, Fenpyroximat, Fenthion, Fenvalerate, Fipronil, Fluazinam, Flucycloxuron, Flucythrinat, Flufenoxuron, Flufenprox, Fluvalinate, Fonophos, Formothion, Fosthiazat, Fubfenprox, Furathiocarb,
HCH, Heptenophos, Hexaflumuron, Hexythiazox,
Imidacloprid, Iprobenfos, Isazophos, Isofenphos, Isoprocarb, Isoxathion, Ivermectin, Lambda-cyhalothrin, Lufenuron,
Malathion, Mecarbam, Mevinphos, Mesulfenphos, Metaldehyd, Methacrifos, Methamidophos, Methidathion, Methiocarb, Methomyl, Metolcarb, Milbemectin, Monocrotophos, Moxidectin,
Naled, NC 184, NI 25, Nitenpyram
Omethoat, Oxamyl, Oxydemethon M, Oxydeprofos,
Parathion A, Parathion M, Permethrin, Phenthoat, Phorat, Phosalon, Phosmet, Phosphamidon, Phoxim, Pirimicarb, Pirimiphos M, Pirimiphos A, Profenofos, Promecarb, Propaphos, Propoxur, Prothiofos, Prothoat, Pymetrozin, Pyrachlophos, Pyridaphenthion, Pyresmethrin, Pyrethrum, Pyridaben, Pyrimidifen, Pyriproxifen, Quinalphos,
RH 5992,
Salithion, Sebufos, Silafluofen, Sulfotep, Sulprofos,
Tebufenozid, Tebufenpyrad, Tebupirimiphos, Teflubenzuron, Tefluthrin, Temephos, Terbam, Terbufos, Tetrachlorvinphos, Thiafenox, Thiodicarb, Thiofanox, Thiomethon, Thionazin, Thuringiensin, Tralomethrin, Triarathen, Triazophos, Triazuron, Trichlorfon, Triflumuron, Trimethacarb,
Vamidothion, XMC, Xylylcarb, Zetamethrin.

Als Zusatzstoffe, die in den erfindungsgemäßen Mitteln vorhanden sein können, kommen alle diejenigen Substanzen in Frage, die üblicherweise in Pflanzenbehandlungsmitteln als Additive einsetzbar sind. Hierzu gehören Polymere, oberflächenaktive Substanzen, Farbstoffe, Antoxidantien, Verdicker, Füllstoffe, Kältestabilisatoren und Lösungsmittel. Außerdem können die erfindungsgemäßen Mittel auch Wasser enthalten.

Als Polymere, die in den erfindungsgemäßen Mitteln enthalten sein können, kommen alle üblichen, in Wasser löslichen oder dispergierbaren Polymerisate oder Copolymerisate in Frage. Vorzugsweise in Betracht kommen Polymere, die durch anionische oder nichtionische Polymerisation von geeigneten Monomeren, z.B. durch Emulsionspolymerisation oder Perlpolymerisation mit Hilfe von Radikalbildnern oder anderen Initiatorsystemen synthetisch zugänglich sind. Vorzugsweise einsetzbar sind auch Polymerisate auf Basis von Naturkautschuk-Latices.

Als Beispiele für besonders bevorzugte Polymere seien die folgenden Substanzen genannt:

Polyvinylacetat (Mowilith®), Polyvinylalkohole mit unterschiedlichem Verseifungsgrad (Mowiol®), Polyvinylpyrrolidone (Lewiskol K®, Agrimer®), Polyacrylate (Carbopol®), in Wasser lösliche oder dispergierbare Lacksystem-Bindemittel auf Acrylat-, Polyol- oder Polyester-Basis (Desmophen®, Roskydal®, Bayhydrol®), außerdem Copolymerisate aus zwei oder mehreren Monomeren wie Acrylsäure, Methacrylsäure, Itaconsäure, Maleinsäure, Fumarsäure, Maleinsäureanhydrid, Vinylpyrrolidon, ethylenisch ungesättigten Monomeren, wie Ethylen, Butadien, Isopren, Chloropren, Styrol, Divinylbenzol, α-Methylstyrol oder p-Methylstyrol, ferner Vinylhalogeniden, wie Vinylchlorid und Vinylidenchlorid, weiterhin Vinylestern, wie Vinylacetat, Vinylpropionat oder Vinylstearat, außerdem Vinylmethylketon oder Ester der Arylsäure oder Methacrylsäure mit einwertigen Alkoholen oder Polyolen, wie Methylacrylat, Methylmethacrylat, Ethylacrylat, Ethylenmethacrylat, Laurylacrylat, Laurylmethacrylat, Decylacrylat, N,N-Dimethylamino-ethylmethacrylat, 2-Hydroxyethylmethacrylat, 2-Hydroxypropylmethacrylat oder Glycidylmethacrylat, ferner Diethylestern oder Halbestern ungesättigter Dicarbonsäuren, weiterhin (Meth)acrylamido-N-methylolmethylether, Amiden oder Nitrilen, wie Acrylamid, Methacrylamid, N-Methylol(meth)-acrylamid, Acrylnitril, Methacrylnitril, darüber hinaus N-substituierten Maleinimiden und Ethern, wie Vinylbutylether, Vinylisobutylether oder Vinylphenylether.

Als oberflächenaktive Substanzen, die in den erfindungsgemäßen Mitteln enthalten sein können, kommen alle diejenigen Stoffe mit oberflächenaktiven Eigenschaften in Frage, die üblicherweise in Pflanzenbehandlungsmitteln vorhanden sind. Vorzugsweise in Betracht kommen nicht-ionogene und anionische Emulgatoren, wie Polyoxyethylen-Fettsäure-Ester, Polyoxyethylen-Fettalkohol-Ether, Alkylaryl-Polyglykol-Ether, Fettaminethoxylate, Alkylsulfonate, Alkylsulfate, Alkylarylsulfonate, Arylsulfate und Silicontenside. Beispiele für derartige oberflächenaktive Substanzen sind in Mc Cutcheon's "Emulsifiers and Detergents" 1982 North America Edit, MC Publishing Co., 175 Rock Road, Glen Rock, NJ 07 452, USA, aufgeführt.

Als Farbstoffe kommen lösliche oder wenig lösliche Farbpigmente in Betracht, wie beispielsweise Titandioxid, Farbruss oder Zinkoxid.

Als Antoxidantien kommen alle üblicherweise für diesen Zweck in Pflanzenbehandlungsmitteln einsetzbaren Stoffe in Frage. Bevorzugt sind sterisch gehinderte Phenole und alkylsubstituierte Hydroxyanisole und Hydroxytoluole.

Als Verdicker kommen alle üblicherweise für diesen Zweck in Pflanzenbehandlungsmitteln einsetzbaren Stoffe in Betracht. Vorzugsweise in Frage kommen organische Polymere, wie teilweise oder vollständig neutralisierte Polyacrylsäuren (Carbopol®), Polyvinylpyrrolidon Homo- oder Copolymerisate (Luviskol K® oder Luviskol VA®), Polyethylenglykole (Polyox®), Ethylenoxid-Propylenoxid-Copolymerisate (Pluronic®) Polyvinylalkohole und nicht-ionisch oder ionisch modifizierte Zellulosen (Tylose®), thixotrope Verdickungsmittel auf Xanthan-Basis (Kelzan®), und außerdem anorganisch disperse Verdicker, wie gefällte oder pyrogene Kieselsäuren, Kaoline, Bentonite, Aluminium-/Silizium-Mischoxide und Silikate.

Als Kältestabilisatoren kommen alle üblicherweise für diesen Zweck in Pflanzenbehandlungsmitteln einsetzbaren Stoffe in Betracht. Vorzugsweise in Frage kommen Harnstoff, Glycerin oder Propylenglykol.

Als Füllstoffe kommen wiederum alle üblicherweise für diesen Zweck in Pflanzenbehandlungsmitteln einsetzbaren inerten Materialien in Betracht. Vorzugsweise in Frage kommen Gesteinsmehle, Caiciumcarbonat, Quarzmehl und Aluminium/Silizium-Mischoxide oder -hydroxide.

Als Lösungsmittel kommen alle üblicherweise für diesen Zweck in Pflanzenbehandlungsmitteln einsetzbaren inerten, organischen Solventien in Betracht. Bevorzugt sind Glykole wie Propylenglykol und Polyethylenglykole mit unterschiedlichem Molekulargewicht; Ketone wie Methylisobutyl- und Methylisopropylketon sowie Cyclohexanon; Amide wie Dimethyl- oder Diethylformamid; N,N-dialkylierte Carbonsäureamide (z.B. Hallcomid®); Alkyllactame wie substituierte Pyrrolidone (z.B. N-Methylpyrrolidon und Surfadone®) und Caprolactame (z.B. Azone®); Kohlenwasserstoffe, n-Paraffine sowie Isoparaffine mit unterschiedlichen Siedebereichen, wie sie beispielsweise unter den Handelsnamen Exxol®, Norpar® und Isopar® erhältlich sind; aromatische Kohlenwassserstoffe wie Xylol sowie aromatische Destillationsschnitte (z.B. Solvesso®); Ester wie Propylenglykol-monomethylether-acetat, Adipinsäure-dibutylester und Phthalsäure-di-nbutylester; Ether wie Propylenglykolmethyl- oder butylether; Alkohole wie Ethanol, n- und i-Propanol, n- und i-Butanol, n- und i-Amylalkohol, Benzylalkohol, Tetrahydrofurfurylalkohol, 1-Methoxy-2-Propanol sowie höhere Alkohole, außerdem durch Modifizierung von Pflanzenölen gewonnene Flüssigträger wie z.B. Rapsölmethylester und 2-Ethylhexyllaurat; und ferner Dimethylsulfoxid, Dioxan und Tetrahydrofuran. Die Lösungsmittel sind als Einzelkomponenten oder als Gemische einsetzbar. Besonders bevorzugt sind solche, die mit dem UV-Stabilisator oder dem ungesättigten Öl mischbar und nicht übermäßig flüchtig sind.

Die Konzentrationen an den einzelnen Komponenten können in den erfindungsgemäßen Mitteln innerhalb eines großen Bereiches variiert werden. So liegen die Konzentrationen, nach Abzug des gegebenenfalls in den erfindungsgemäßen Mitteln enthaltenen Wassers,
- an Signalsubstanzen im allgemeinen zwischen 0,01 und 1 Gew.-%, vorzugsweise zwischen 0,05 und 0,3 Gew.-%,
- an UV-Absorbern im allgemeinen zwischen 1 und 40 Gew.-%, vorzugsweise zwischen 5 und 20 Gew.-%,
- an Ricinusöl zwischen 10 und 90 Gew.-%, vorzugsweise zwischen 40 und 85 Gew.-%,
- an pestiziden Wirkstoffen im allgemeinen bis zu 10 Gew.-%, vorzugsweise bis 24 5 Gew.-%,
- an Zusatzstoffen zwischen 0 und 70 Gew.-%, vorzugsweise zwischen 0 und 60 Gew.-%.

Im übrigen können die erfindungsgemäßen Mittel auch Wasser enthalten. Der Wassergehalt ist vor dem Trocknen innerhalb eines großen Bereiches variabel. Er liegt im allgemeinen zwischen 0 und 80 Gew.-%.

Bei der Herstellung der erfindungsgemäßen Mittel geht man im allgemeinen so vor, daß man zunächst durch Lösen oder Dispergieren mindestens einer Signalsubstanz, mindestens eines UV-Absorbers und eines oder mehrerer pestizider Wirkstoffe in Ricinusöl unter Rühren bei Temperaturen zwischen 20°C und 70°C, vorzugsweise bei Raumtemperatur, eine Vormischung herstellt und gegebenenfalls Zusatzstoffe hinzufügt. Bei der Herstellung von-erfindungsgemäßen Mitteln kann man jedoch auch in anderer Weise verfahren. So kann man beispielsweise die Vormischung unter Rühren bei Temperaturen zwischen 20°C und 70°C, vorzugsweise bei Raumtemperatur, in einer Lösung mindestens einer oberflächenaktiven Substanz in Wasser dispergieren. Die Dispergierung kann dabei so durchgeführt werden, daß sich eine Öl-in-Wasser-Emulsion bildet, in der die mittlere Teilchengröße im allgemeinen zwischen 0,5 und 50 µm, vorzugsweise jedoch zwischen 1 und 20 µm liegt. Die entstehende Emulsion kann anschließend unter Rühren bei Temperaturen zwischen 20°C und 70°C, vorzugsweise jedoch bei Raumtemperatur, mit einer Lösung bzw. Dispersion mindestens eines Polymers in Wasser sowie gegebenenfalls mit Zusatzstoffen versetzt werden.

Bei der Herstellung der erfindungsgemäßen Mittel kann man jedoch auch in anderer Art und Weise vorgehen. Prinzipiell ist es möglich, die Bestandteile in beliebiger Reihenfolge zu vermischen. Zur Herstellung der erfindungsgemäßen Mittel kommen alle dafür üblichen Rühr- und Mischaggregate in Betracht.

Die erfindungsgemäßen Mittel fallen bei der Herstellung in dünnflüssigem oder viskosem Zustand an. Nach der Ausbringung bleiben sie je nach Herstellungsart viskos, oder sie bilden einen nicht fließfähigen Belag.

Die erfindungsgemäßen Mittel eignen sich sehr gut zur Bekämpfung schädlicher Insekten und unerwünschter Vertreter der Ordnung Acarina, die in der Landwirtschaft, in Forsten und im Gartenbau einschließlich Weinbau vorkommen. So lassen sie sich einsetzen gegen nachstehend genannte Schädlinge.

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Acanthoscelides obtectus, Bruchidius obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro₂ Argas spp., Qrnithodoros spp., Dermanyssus gallinae, Eriophyes ribis, Phyllocoptruta oleiyora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Die erfindungsgernäßen Mittel können unter Verwendung konventioneller Vorrichtungen, wie sie dem Fachmann bekannt sind, in der Form von Tröpfchen, tropfenähnlichen Bereichen oder dünnen begrenzten Schichten auf die zu behandelnden Pflanzen oder Kulturflächen ausgebracht und dort verteilt werden. Besonders geeignet für die Behandlung von Stammobst oder Weinreben ist ein Verfahren, bei dem die erfindungsgemäßen Formulierungen mit Hilfe von Dosierspendern, Pipetten oder Spritzen in definierter Menge an den Stamm der Pflanzen appliziert werden, wobei die Applikationsvorrichtung zur flächigen Verteilung der Mittel über, einen größeren Bereich auch mit einer Streichvorrichtung oder mit einer flächigen Düse versehen sein können. Es ist auch möglich, die erfindungsgemäßen Formulierungen auf einer festen Unterlage auszustreichen und dort trocknen zu lassen.

Die Mengen, in der die erfindungsgemäßen Mittel ausgebracht werden, können innerhalb-eines-größeren Bereiches variiert werden. Sie liegen im allgemeinen in der Größenordnung, die üblicherweise für den Einsatz von "Attract-and-kill-Formulierungen" gewählt wird.

Die Herstellung und die Verwendung erfindungsgemäßer Mittel wird durch die folgenden Beispiele veranschaulicht.

### Herstellungsbeispiele

### Beispiele 1 bis 5

In einer 0,2 gew.-%igen Lösung von Butylhydroxytoluol in Rizinusöl (Öl-Lösung) werden bei 50°C unter Rühren die in der Tabelle 2 aufgeführten Mengen des Pheromons E,E-8,10-Dodecadienol (= Pheromon), des UV-Absorbers 2-Ethylhexyl-2-cyano-3,3-diphenyl-2-propenoat (= UV-Absorber A) und des UV-Absorbers 2-Hydroxy-4-methoxy-benzophenon (= UV-Absorber B) gelöst.

**Tabelle 2**

| Bsp. Nr. | Pheromon (g) | UV-Absorber A (g) | UV-Absorber B (g) | Öl-Lösung (g) |
|---|---|---|---|---|
| 1 | 2 | 12,5 | 12,5 | 73,0 |
| 2 | 2 | 10,0 | 10,0 | 78,0 |
| 3 | 2 | 7,5 | 7,5 | 83,0 |
| 4 | 2 | 5,0 | 5,0 | 88,0 |
| 5 | 2 | 2,5 | 2,5 | 93,0 |

### Beispiel 6

In 73 g einer 0,2 gew.-%igen Lösung von Butylhydroxytoluol in Rizinusöl werden unter Rühren bei Raumtemperatur 2 g des Pheromons E,E-8,10-Dodecadienol und 25,0 g des Benztriazols der Formel 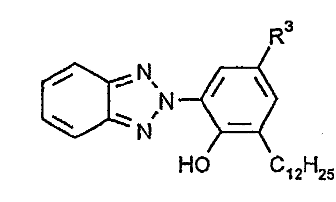 R³ = CH₃ oder C₂-C₁₂-Alkyl
gelöst.

### Bewertung der Pheromonstabilität

Jeweils 1 g der erfindungsgemäßen Formulierungen der Beispiele 1 bis 6 wurden in ein rundes Glasgefäß mit einem Durchmesser von 5 cm gefüllt und mit einer Quarzglasplatte abgedeckt. Die Gefäße wurden in einem Schnellbelichtungsgerät der Firma Heraeus mit der Bezeichnung "Suntest CPS" über einen Zeitraum von 6 Tagen bei einer Temperatur von 40°C belichtet. Das Gerät war mit einer Xenonlampe ausgerüstet und lieferte eine Bestrahlungsstärke von maximal 765 W/m². Zweimal täglich wurden die Gefäße für jeweils 15 Minuten geöffnet, um Luftzutritt zu ermöglichen. Nach der Belichtung wurde der Restgehalt des Pheromons E,E-8,10-Dodecadienol in den erfindungsgemäßen Formulierungen analytisch bestimmt, und daraus der prozentuale Abbau errechnet. Die Ergebnisse sind in der Tabelle 3 zusammengefaßt.

**Tabelle 3**

| Beispiel Nr. | Pheromonabbau (%) |
|---|---|
| 1 | 14,0 |
| 2 | 14,2 |
| 3 | 14,5 |
| 4 | 18,6 |
| 5 | 21,3 |
| 6 | 18,2 |

### Beispiel 7

0,03 g E,E-8,10-Dodecadienol, 0,04 g Butylhydroxytoluol, 2,0 g 2-Ethylhexyl-2-cyano-3,3-diphenyl-2-propenoat, 2,0 g 2-Hydroxy-4-methoxy-benzophenon und 3,5 g Cyfluthrin werden bei 50°C in 22 g Rizinusöl gelöst. Diese Vormischung wird mit Hilfe eines Rotor-Stator-Dispergierstabes bei Raumtemperatur in einer Lösung von 0,6 g eines Rizinusölethoxylates mit einem mittleren Ethoxylierungsgrad von 30 in 30 g entmineralisiertem Wasser emulgiert. Man versetzt diese Emulsion bei Raumtemperatur unter Rühren mit 30 g einer 45 gew.-%igen wäßrigen Dispersion eines Emulsionspolymerisats aus Acrylnitril, Butadien und Methacrylsäure sowie mit 7,43 g entmineralisiertem Wasser. Anschließend werden 2,5 g Hydroxyethylcellulose eingerührt. (Diese Hydroxyethylcellulose weist bei einer Konzentration von 20 g/l in Wasser eine dynamische Viskosität von 4000 mPa.S bei 20°C auf). Nach 15 Stunden Standzeit wird die Mischung zu einer homogenen Paste verrührt.

### Vergleichsbeispiel 1

2 g des Pheromons E,E-8,10-Dodecadienol werden bei 50°C in 98 g des UV-Absorbers 2-Ethylhexyl-2-cyano-3,3-diphenyl-2-propenoat gelöst.

### Vergleichsbeispiel 2

2 g des Pheromons E,E-8,10-Dodecadienol werden bei 50°C in einem Gemisch aus 73 g 2-Ethylhexyl-2-cyano-3,3-diphenyl-2-propenoat und 25 g 2-Hydroxy-4-methoxy-benzophenol gelöst.

### Vergleichsbeispiel 3

2 g des Pheromons E,E-8,10-Dodecadienol werden bei 50°C in einem Gemisch aus 25 g des Benztriazols gemäß Beispiel 6 und 73 g eines Paraffinöls mit einem Siedepunkt >300°C und einer Viskosität von 16 mm²/sec gelöst.

### Vergleichsbeispiel 4

2 g des Pheromons E,E-8,10-Dodecadienol werden bei 50°C in 98 g Rizinusöl gelöst.

### Bewertung der Pheromonstabilität

Die Formulierungen der Vergleichsbeispiele 1 bis 4 wurden bezüglich des Pheromonabbaus unter UV-Bestrahlung so geprüft, wie es oben für die Mittel gemäß Beispielen 1 bis 6 beschrieben wurde. Die Ergebnisse sind in der Tabelle 4 zusammengefaßt.

**Tabelle 4**

| Vergleichsbeispiel Nr. | Pheromonabbau (%) |
|---|---|
| 1 | 96,3 |
| 2 | 87,4 |
| 3 | 98,0 |
| 4 | 99,9 |

### Vergleichsbeispiel 5

0,04 g Butylhydroxytoluol, 2,0 g 2-Ethylhexyl-2-cyano-3,3-diphenyl-2-propenoat, 2,0 g 2-Hydroxy-4-methoxy-benzophenon und 3,5 g Cyfluthrin werden bei 50°C in 22 g Rizinusöl gelöst. Diese Vormischung wird mit Hilfe eines Rotor-Stator-Dispergierstabes bei Raumtemperatur in einer Lösung von 0,6 g eines Rizinusölethoxylates mit einem mittleren Ethoxylierungsgrad von 30 in 30 g entmineralisiertem Wasser emulgiert. Man versetzt diese Emulsion bei Raumtemperatur unter Rühren mit 30 g einer 45 gew.-%igen wäßrigen Dispersion eines Emulsionspolymerisats aus Acrylnitril, Butadien und Methacrylsäure sowie mit 7,43 g entmineralisiertem Wasser. Anschließend werden 2,5 g Hydroxyethylcellulose eingerührt. (Diese Hydroxyethylcellulose weist bei einer Konzentration von 20 g/l in Wasser eine dynamische Viskosität von 4000 mPa.S bei 20°C auf). Nach 15 Stunden Standzeit wird die Mischung zu einer homogenen Paste verrührt.

### Verwendungsbeispiele

### Beispiel A

Apfelbäumchen mit einer Größe von ungefähr 30 cm wurden am Stamm, auf einem Blatt an der Oberseite und an einem Blatt an der Unterseite mit 3 etwa 50 Mikroliter großen Tropfen der erfindungsgemäßen Formulierung des Beispiels 7 versehen. Die Bäumchen wurden zusammen mit 10 männlichen Individuen des Apfelwicklers (Cydia Pomonella) in Käfige aus Gaze eingeschlossen. Vier dieser Käfige wurden in einem Windkanal positioniert, durch den Luft mit einer Geschwindigkeit von 0,1 m/s durchgeleitet wurde. Nach 24 Stunden wurde die Gesamtzahl der abgetöteten Insekten in den Käfigen bestimmt. Sie betrug 50 % der ursprünglich eingesetzten Tiere. In einem zeitgleich durchgeführten Experiment mit der pheromonfreien Vergleichsformulierung 5 waren es nur 12,5 %.

## Patentansprüche

1. Schädlingsbekämpfungsmittel, **dadurch gekennzeichnet, daß** sie
- mindestens eine Signalsubstanz,
- mindestens einen mit Wasser nur wenig mischbaren UV-Absorber,
- Ricinusöl,
- mindestens einen pestiziden Wirkstoff und
- gegebenenfalls Zusatzstoffe
enthalten.

2. Schädlingsbekämpfungsmittel gemäß Anspruch 1, **dadurch gekennzeichnet, daß** der Gehalt, nach Abzug des enthaltenen Wassers, an
- Signalsubstanz bzw. Signalsubstanz-Gemisch zwischen 0,01 und 1 Gew.-% liegt,
- UV-Absorber bzw. UV-Absorber-Gemisch zwischen 1 und 40 Gew.-% liegt,
- Ricinusöl zwischen 10 und 90 Gew. - % liegt,
- pestizidem Wirkstoff bis zu 10 Gew. - % beträgt und
- Zusatzstoffen zwischen 0 und 70 Gew.-% liegt.

3. Schädlingsbekämpfungsmittel gemäß Anspruch 1, **dadurch gekennzeichnet, daß** ein Pyrethroid als pestizider Wirkstoff enthalten ist.

4. Schädlingsbekämpfungsmittel gemäß Anspruch 1, **dadurch gekennzeichnet, daß** Cyfluthrin als pestizider Wirkstoff enthalten ist.

5. Schädlingsbekämpfungsmittel gemäß Anspruch 1, **dadurch gekennzeichnet, daß** β-Cyfluthrin als insektizider Wirkstoff enthalten ist.

6. Schädlingsbekämpfungsmittel gemäß Anspruch 1, **dadurch gekennzeichnet, daß** E,E-8,10-Dodecandienol als Signalsubstanz enthalten ist.

7. Schädlingsbekämpfungsmittel gemäß Anspruch 1 **dadurch gekennzeichnet, daß** Benztriazol der Formel 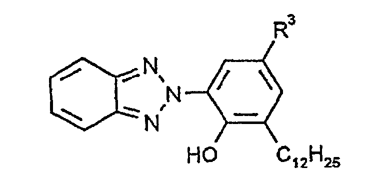 in welcher
R³ für Methyl oder C₂-C₁₂-Alkyl steht,
als UV-Absorber enthalten ist.

8. Verfahren zur Herstellung von Schädlingsbekämpfungsmitteln gemäß Anspruch 1, **dadurch gekennzeichnet, daß** man
a) mindestens eine Signalsubstanz, mindestens einen mit Wasser nur wenig mischbaren UV - Absorber sowie mindestens einen pestiziden Wickstoff und gegebenenfalls Zusatzstoffe in Ricinusöl dispergiert und
b) gegebenenfalls diese Vormischung unter Zusatz von oberflächenaktiven Substanzen in Wasser emulgiert.

9. Verwendung von Mitteln gemäß Anspruch 1 zur Bekämpfung von schädlichen Insekten und unerwünschten Vertretern der Ordnung Acarina in der Landwirtschaft, der Forstwirtschaft und im Gartenbau.

## Claims

1. Pesticides, **characterized in that** they comprise
- at least one signal substance,
- at least one UV absorber which is only sparingly miscible with water,
- castor oil,
- at least one pesticidally active compound and,
- if appropriate, additives.

2. Pesticides according to Claim 1, **characterized in that**, after deducting the water which is present, the content of
- signal substance or signal substance mixture is between 0.01 and 1% by weight,
- UV absorber or UV absorber mixture is between 1 and 40% by weight,
- castor oil is between 10 and 90% by weight,
- pesticidally active compound is up to 10% by weight and
- additives is between 0 and 70% by weight.

3. Pesticides according to Claim 1, **characterized in that** a pyrethroid is present as the pesticidally active compound.

4. Pesticides according to Claim 1, **characterized in that** cyfluthrin is present as the pesticidally active compound.

5. Pesticides according to Claim 1, **characterized in that** β-cyfluthrin is present as the insecticidally active compound.

6. Pesticides according to Claim 1, **characterized in that** E,E-8,10-dodecanedienol is present as the signal substance.

7. Pesticides according to Claim 1, **characterized in that** a benzotriazole of the formula 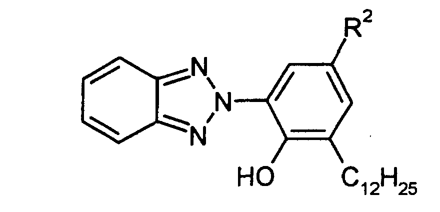 in which
R³ represents methyl or C₂-C₁₂-alkyl
is present as the UV absorber.

8. Process for the preparation of pesticides according to Claim 1, **characterized in that**
a) at least one signal substance, at least one UV absorber which is only sparingly miscible with water and at least one pesticidally active compound and, if appropriate, additives are dispersed in castor oil, and
b) if appropriate, this premix is emulsified in water with the addition of surface-active substances.

9. Use of compositions according to Claim 1 for controlling harmful insects and undesirable representatives of the order Acarina in agriculture, forestry and horticulture.

## Revendications

1. Compositions pesticides, **caractérisées en ce qu'** elles contiennent
- au moins une substance signal,
- au moins un absorbeur de rayons ultraviolets seulement peu miscibles à l'eau,
- de l'huile de ricin,
- au moins une substance active pesticide, et
- le cas échéant, des additifs.

2. Compositions pesticides suivant la revendication 1, **caractérisées en ce que**, après soustraction de l'eau présente,
- la teneur en substance signal ou en mélange de substances signal se situe entre 0,01 et 1 % en poids,
- la teneur en absorbeur de rayons ultraviolets ou en mélange d'absorbeurs de rayons ultraviolets se situe entre 1 et 40 % en poids,
- la teneur en huile de ricin se situe entre 10 et 90 % en poids,
- la teneur en substance pesticide va jusqu'à 10 % en poids et
- la teneur en additifs se situe entre 0 et 70 % en poids.

3. Compositions pesticides suivant la revendication 1, **caractérisées en ce qu'**elles contiennent un pyréthroïde comme substance active pesticide.

4. Compositions pesticides suivant la revendication 1, **caractérisées en ce qu'**elles contiennent de la cyfluthrine comme substance active pesticide.

5. Compositions pesticides suivant la revendication 1, **caractérisées en ce qu'**elles contiennent de la β-cyfluthrine comme substance active insecticide.

6. Compositions pesticides suivant la revendication 1, **caractérisées en ce qu'**elles contiennent comme substance signal du E,E-8,10-dodécanediénol.

7. Compositions pesticides suivant la revendication 1, **caractérisées en ce qu'**elles contiennent comme absorbeur de rayons ultraviolets du benzotriazole de formule 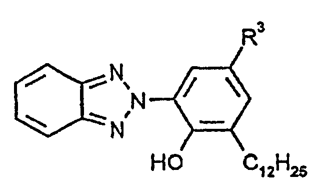 dans laquelle
R³ est un groupe méthyle ou alkyle en C₂ à C₁₂.

8. Procédé de préparation de compositions pesticides suivant la revendication 1, **caractérisé en ce que** :
a) on disperse dans de l'huile de ricin au moins une substance signal, au moins un absorbeur de rayons ultraviolets seulement peu miscible à l'eau ainsi qu'au moins une substance pesticide et, le cas échéant, des additifs et
b) le cas échéant, on émulsionne dans l'eau ce mélange préalable additionné de substances tensio-actives.

9. Utilisation de compositions suivant la revendication 1, pour combattre des insectes parasites et des représentants indésirables de l'ordre des Acarina en agriculture, en sylviculture et en horticulture.
